# EUROPEAN PATENT APPLICATION

(11) **EP 2 309 590 A1**
(43) Date of publication of application: **13.04.2011**
(21) Application number: 09290766.6
(22) Date of filing: 07.10.2009
(51) Int. Cl.: H01Q 1/24, H01Q 3/26

(54) **Transmit frontend with feedback for multiple antenna elements.**

(71) Applicant: Alcatel Lucent, 75008 Paris (FR)
(72) Inventor: Pascht, Andreas Dr., 73614 Schorndorf (DE); Bitzer, Thomas, 73614 Schorndorf (DE)
(74) Representative: Kohler Schmid Möbus

(57) **Abstract**

The invention relates to a transmit frontend, in particular for a base station, comprising: a plurality of antenna elements being preferably devised as active antenna elements (5a to 5d), each antenna element (5a to 5d) being adapted for transmitting an RF signal (7a' to 7d'), a plurality of measurement antenna elements (15a to 15d), each measurement antenna element (15a to 15d) being associated with one of the antenna elements (5a to 5d) for receiving a respective one of the RF signals (7a' to 7d'), and a feedback path (14) for providing a feedback signal (13) from the measurement antenna elements (15a to 15d) to a baseband part of the transmit frontend. The invention also relates to a base station and to a radio network comprising such a transmit frontend, as well as to a corresponding method.

## Description

### Field of the Invention

The invention relates to the field of telecommunications, and, more particularly, to transmit frontends for transmission of RF signals.

### Background

This section introduces aspects that may be helpful in facilitating a better understanding of the invention. Accordingly, the statements of this section are to be read in this light and are not to be understood as admissions about what is in the prior art or what is not in the prior art.

Base stations typically comprise a plurality of antenna elements for transmitting RF signals and a baseband part being connected to these antenna elements. The baseband part is adapted to generate so-called baseband signals (typically in the MHz range) and may also be adapted to perform up-conversion (mixing) of the baseband signals to generate RF signals at a carrier frequency, typically in the GHz range. Each RF signal is then provided to an amplifier before being fed to a respective transceiver antenna for RF transmission. The amplification (and possibly also the up-conversion) may be performed in so-called active antenna elements which are connected to the baseband part via cabling. The antenna elements together with the baseband part form a transmit frontend of the base station.

Feedback about the amplified RF signals may be provided from the antenna elements back to the baseband part, thus allowing to perform (digital) pre-distortion of the baseband signals for linearization of the amplification and/or allowing to calibrate the antenna elements by adjusting time delay differences between the antenna elements. However, at present, no effective way of providing feedback to the baseband part is known.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect relates to a transmit frontend, in particular for a base station, comprising: a plurality of antenna elements being preferably devised as active antenna elements, each antenna element being adapted for transmitting an RF signal; a plurality of measurement antenna elements, each measurement antenna element being associated with one of the antenna elements for receiving a respective one of the RF signal; and a feedback path for providing a feedback signal from the measurement antenna elements to a baseband part of the transmit frontend.

The inventors have found that using a single measurement antenna for a plurality of antenna elements of an antenna array / a base station does not produce a feedback signal which is accurate enough for adjusting the linearization / calibration of each amplifier / antenna element individually. Thus, the inventors propose to provide each antenna element with an associated measurement antenna element, the measurement antenna element being typically located close to the associated antenna element for avoiding interference with RF signals generated by other antenna elements of the base station. The feedback signal(s) thus generated is/are provided back to the baseband part, thus allowing an individual linearization / calibration of the different transceiver paths of the transmit fronted. The feedback path may comprise several parallel branches, each being devised for a feedback signal originating from a different antenna element.

In a preferred embodiment, however, the transmit frontend further comprises a switching unit for alternate connection of the measurement antenna elements to the feedback path. In this case, the feedback signal is only available for a single antenna element at a time. However, this does not prevent efficient linearization / calibration of the individual amplifiers / antenna elements. As a feedback path typically requires a considerable amount of equipment for down-conversion of the RF signal (mixer, IF amplifier, etc.), using only a single feedback path for all antenna elements allows to provide feedback to the baseband part in a very cost-effective way.

In a further embodiment, the baseband part comprises at least one calibration unit for calibrating at least one of the antenna elements based on the feedback signal from the associated measurement antenna element. The calibration performs adjusting timing delay differences between different antenna elements, the different antenna elements being preferably devised as an active antenna array. Two or more antennas of an antenna array may be used for performing MIMO transmissions, requiring an adequate adjustment of the timing of the different RF signals. Such an adjustment may be performed in the calibration unit based on the feedback signal.

In a further embodiment, the baseband part comprises at least one linearization unit for linearization of an amplifier (unit) adapted for amplifying the RF signal to be transmitted by a respective antenna element, the linearization being based on the feedback signal from the associated measurement antenna element. Linearization of the amplification is typically performed by (digital) pre-distortion of the baseband signal, the pre-distortion being reciprocal to the distortion due to the amplifier. After Digital-to-Analogue- and up-conversion, a pre-distorted RF signal derived from the baseband signal is then provided as an input signal to the amplifier.

In further embodiments, the transmit frontend comprises a mixing unit for down-conversion of the feedback signal and an A/D-converter for performing Analogue-to-Digital conversion of the feedback signal. A mixer may be used for converting the RF feedback signal received by the measurement antenna from its center frequency in the GHz range back to the baseband frequency range. However, the mixer can also be used for down-conversion of the RF feedback signal to an intermediate frequency (IF), the intermediate-frequency feedback signal being provided to the (digital) baseband part after A/D-conversion. It will be understood that filtering and/or amplification of the intermediate frequency feedback signal may be performed prior to A/D conversion.

Further aspects relate to a base station and to a radio network comprising at least one transmit frontend as described above. Typically, the transmit frontend is implemented in a base station. However, it may also be possible to implement the transmit frontend in other wireless devices arranged in the radio network, e.g. in mobile phones or in PDAs.

A further aspect relates to a method for providing a feedback signal to a baseband part of a transmit frontend which is devised e.g. in a base station, the method comprising: transmitting an RF signal from each of a plurality of antenna elements being preferably devised as active antenna elements; receiving the RF signal in one of a plurality of measurement antenna elements, each measurement antenna element being associated with a respective one of the antenna elements; and providing the feedback signal from the measurement antenna elements to the baseband part of the transmit frontend via a feedback path.

In a preferred variant, only one of the measurement antenna elements is connected to the feedback path at a time. As in this case only a single feedback path is required, a cost-effective way of providing feedback to the baseband part can be realized.

In a further variant, the method further comprises: using the feedback signal of the measurement antenna element for calibration of the associated antenna element. The calibration comprises the step of adjusting timing delay differences between different antenna elements which may be devised as an (active) antenna array. In such a way, synchronization of the different antennas of the antenna array can be performed, thus facilitating MIMO transmissions.

In a further variant, the method further comprises: using the feedback signal of a measurement antenna element for linearization of an amplifier being adapted for amplifying the RF signal to be transmitted by the associated active antenna element. The linearization step preferably further comprises: performing digital pre-distortion of an input signal which is provided to the amplifier. Although digital pre-distortion has to be performed in a continuous way for allowing the linearization of the amplification in a respective amplifier, it is not necessary to continuously provide the feedback signal to the baseband part for performing the linearization, such that switching between the different measurement antennas may be performed.

A further aspect of the invention relates to a computer program product adapted to perform all or at least some of the steps of the method described above. In particular, the computation of the digital pre-distortion of the baseband signal which is required for the linearization and/or the computation of the delay differences for the calibration may be performed in a digital signal processing unit arranged in the baseband part of the base station.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of a transmit frontend according to the invention, and
- **Fig. 2**: shows a detail of the transmit frontend of Fig. 1 with a plurality of antenna elements and associated measurement antenna elements being alternately connected to a feedback path.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

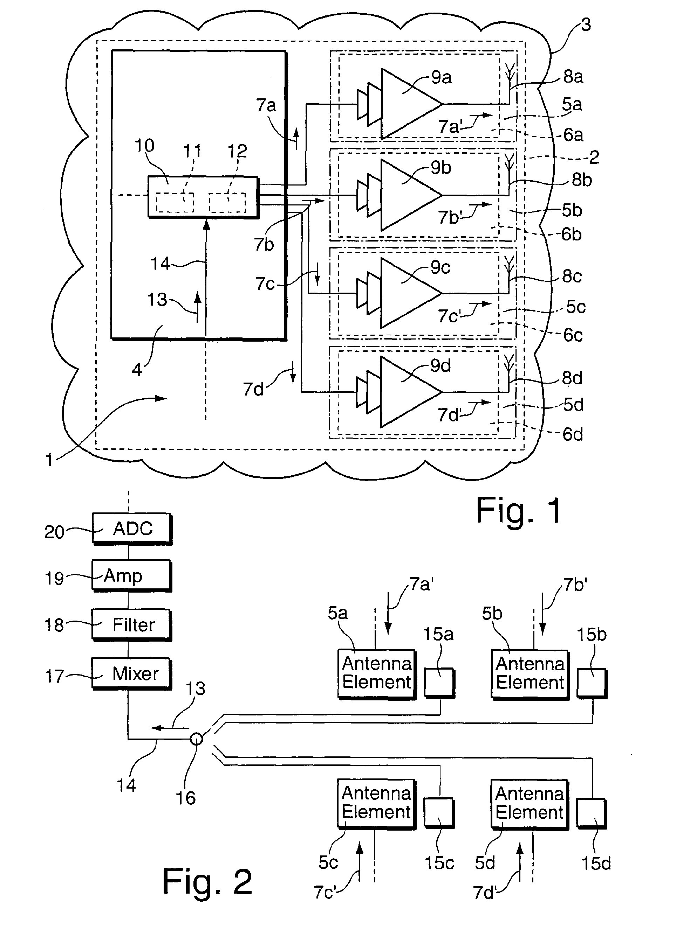

**Fig. 1** shows a transmit frontend **1** of a base station **2** for mobile radio communications being part of a radio network **3.** The transmit frontend 1 may be adapted to perform radio transmissions according to one or more telecommunication standards, e.g. the UMTS (universal mobile telecommunications) or the LTE (long-term evolution) standard.

The transmit frontend 1 comprises a baseband part **4** which is connected (via cabling) to four active antenna elements **5a** to **5d** having identical construction. It will be understood that although four active antenna elements have been chosen in the present example, a higher or smaller number of active antenna elements may be used as well. Each active antenna element 5a to 5d comprises a signal processing device **6a** to **6d** for performing signal processing of a baseband signal **7a** to **7d** which is provided from the baseband part 4 to a respective one of the active antenna elements 5a to 5d. Each of the active antenna elements 5a to 5d also comprises an antenna **8a** to **8d** for radio transmission of an RF signal **7a'** to **7d'** which is generated by the signal processing device 6a to 6d by processing the baseband signal 7a to 7d. The array of four parallel antenna elements 5a to 5d may, for example, be used for supporting a MIMO scheme.

In the following, the processing of the baseband signals 7a to 7d in the signal processing devices 6a to 6d will be exemplarily described for the first baseband signal 7a which is provided as a digital signal from the baseband part 4 to the first active antenna element 5a. In the signal processing device 6a, the baseband signal 7a is D/A-converted and subsequently up-converted (shifted) to a carrier frequency in the GHz range. The up-converted signal is then provided as an input signal to a (power) amplifier **9a** of the active antenna element 5a. The amplifier 9a may e.g. comprise a driver stage, a (transistor) switching stage and a reconstruction filter. As these amplifier components are known to those skilled in the art, no further explanation of their functionality will be given.

The person skilled in the art will appreciate that it is not necessary to perform the D/A-conversion, the mixing, and the amplification in the antenna elements 5a to 5d, as it is also possible to perform part or the entire signal processing in the baseband part 4. In the latter case, only the transceiver antennas 8a to 8d are located remote from the baseband part 4.

Typically, the amplification of the up-converted baseband signals 7a to 7d in the amplifier units 9a to 9d leads to distortions of the amplified RF signals 7a' to 7d'. For providing linearization of the amplification by digital pre-distortion of the baseband signals 7a to 7d, a linearization unit **11** is arranged in a digital signal processing unit **10** of the baseband part 4. The digital signal processing unit 10 further comprises a calibration unit **12** for calibrating the antenna elements 5a to 5d e.g. by adjusting timing delay differences between the different antenna elements 5a to 5d. The latter is particularly useful when MIMO transmissions are to be performed with the transmit antennas 8a to 8d.

Both for the linearization of the amplifiers 9a to 9d and for the calibration of the antenna elements 5a to 5d, a feedback signal **13** is provided to the digital signal processing unit 10 via a feedback path **14,** the generation of the feedback signal 13 being explained in the following with respect to **Fig. 2****.**

As can be gathered from Fig. 2, each of the active antenna elements 5a to 5d has a measurement antenna element **15a** to **15d** associated therewith. The measurement antenna elements 15a to 15d are located close to the associated active antenna elements 5a to 5d for receiving only the RF signal 7a' to 7d' emitted by the associated antenna 8a to 8d. It will be understood that the measurement antennas 15a to 15d may be equipped with an (electrical) shielding for avoiding reception of RF signals emitted from adjacent antenna elements 5a to 5d.

The feedback path 14 to the digital signal processing unit 10 also comprises a switch **16** allowing alternate connection of only one of the measurement antenna elements 15a to 15d to the feedback path 14. In the present example, the feedback path 14 comprises a mixer **17** for down-conversion of the RF feedback signal from the measurement antenna elements 15a to 15d to an intermediate frequency or to the baseband. Following the mixer 17, a filter **18** is provided for filtering unwanted frequency components of the feedback signal 13, the filter 18 being followed by an intermediate frequency (IF) or baseband amplifier **19.** An analog-to-digital converter **20** then converts the amplified feedback signal 13 to the digital domain before it is provided to the digital signal processing unit 10.

The digital signal processing unit 10 is adapted to provide the feedback signal 13 both to the linearization unit 11 and to the calibration unit 12. As has been explained above, although feedback from only one of the antenna elements 5a to 5d can be provided to the digital signal processing unit 10 at a time, this is sufficient for performing linearization of the amplification of the amplifiers 9a to 9d, resp., for performing delay adjustment of the antenna elements 5a to 5d. Thus, an effective way of providing feedback to the baseband part 4 can be provided.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Transmit frontend (1), in particular for a base station (2), comprising:
a plurality of antenna elements being preferably devised as active antenna elements (5a to 5d), each antenna element (5a to 5d) being adapted for transmitting an RF signal (7a' to 7d'),
a plurality of measurement antenna elements (15a to 15d), each measurement antenna element (15a to 15d) being associated with one of the antenna elements (5a to 5d) for receiving a respective one of the RF signals (7a' to 7d'), and
a feedback path (14) for providing a feedback signal (13) from the measurement antenna elements (15a to 15d) to a baseband part (4) of the transmit frontend (1).

2. Transmit frontend according to claim 1, further comprising: a switching unit (16) for alternate connection of the measurement antenna elements (15a to 15d) to the feedback path (14).

3. Transmit frontend according to claim 1 or 2, wherein the baseband part (4) comprises at least one calibration unit (11) for calibrating at least one of the antenna elements (5a to 5d) based on the feedback signal (13) from the associated measurement antenna element (15a to 15d).

4. Transmit frontend according to claim 3, wherein the calibration unit (11) is adapted for adjusting timing delay differences between different antenna elements (5a to 5d), the different antenna elements (5a to 5d) being preferably devised as an antenna array.

5. Transmit frontend according to any one of the preceding claims, wherein the baseband part (4) comprises at least one linearization unit (12) for linearization of an amplifier (9a to 9d) adapted for amplifying the RF signal (7a' to 7d') to be transmitted by a respective antenna element (5a to 5d), the linearization being based on the feedback signal (13) from the associated measurement antenna element (15a to 15d).

6. Transmit frontend according to claim 5, wherein the linearization unit (12) is adapted for performing digital pre-distortion of an input signal (7a to 7d) to be provided to the amplifier (9a to 9d).

7. Transmit frontend according to any one of the preceding claims, further comprising a mixing unit (17) for down-conversion of the feedback signal (13).

8. Transmit frontend according to any one of the preceding claims, further comprising an analog-to-digital converter (20) for converting the analog feedback signal (13) into a digital feedback signal (13).

9. Base station (2) comprising at least one transmit frontend (1) according to any one of the preceding claims.

10. Radio network (3) comprising at least one base station (2) according to claim 9.

11. Method for providing a feedback signal (13) to a baseband part (4) of a transmit frontend (1) of a base station (2), the method comprising:
transmitting an RF signal (7a' to 7d') from each of a plurality of antenna elements which are preferably devised as active antenna elements (5a to 5d),
receiving the RF signal (7a' to 7d') in one of a plurality of measurement antenna elements (15a to 15d), each measurement antenna element (15a to 15d) being associated with a respective one of the antenna elements (5a to 5d), and
providing the feedback signal (13) from the measurement antenna elements (15a to 15d) to the baseband part (4) of the transmit frontend (1) via a feedback path (14).

12. Method according to claim 11, wherein only one of the measurement antenna elements (15a to 15d) at a time is connected to the feedback path (14).

13. Method according to claim 11 or 12, further comprising: using the feedback signal (13) of the measurement antenna element (15a to 15d) for calibration of the associated antenna element (5a to 5d), the method preferably further comprising: adjusting timing delay differences between different antenna elements (5a to 5d), the different antenna elements (5a to 5d) being preferably devised as an antenna array.

14. Method according to any one of claims 11 to 13, further comprising:
using the feedback signal (13) of a measurement antenna element (15a to 15d) for linearization of an amplifier (9a to 9d) being adapted for amplifying the RF signal (7a' to 7d') to be transmitted by the associated active antenna element (5a to 5d), the linearization preferably further comprising: performing digital pre-distortion of an input signal (7a to 7d) which is provided to the amplifier (9a to 9d).

15. Computer program product adapted to perform all the steps of the method according to any one of claims 11 to 14.

## Amended claims

### Amended claims in accordance with Rule 137(2) EPC.

**1.** Transmit frontend (1), in particular for a base station (2), comprising:
a plurality of antenna elements being preferably devised as active antenna elements (5a to 5d), each antenna element (5a to 5d) being adapted for transmitting an RF signal (7a' to 7d'),
a plurality of measurement antenna elements (15a to 15d), each measurement antenna element (15a to 15d) being associated with one of the antenna elements (5a to 5d) for receiving a respective one of the RF signals (7a' to 7d'), and
a feedback path (14) for providing a feedback signal (13) from the measurement antenna elements (15a to 15d) to a baseband part (4) of the transmit frontend (1),
wherein the baseband part (4) comprises at least one calibration unit (11) for calibrating at least one of the antenna elements (5a to 5d) based on the feedback signal (13) from the associated measurement antenna element (15a to 15d), and wherein
the calibration unit (11) is adapted for adjusting timing delay differences between different ones of the antenna elements (5a to 5d).

**2.** Transmit frontend according to claim 1, further comprising: a switching unit (16) for alternate connection of the measurement antenna elements (15a to 15d) to the feedback path (14).

**3.** Transmit frontend according to claim 1, wherein the different antenna elements (5a to 5d) are devised as an antenna array.

**4.** Transmit frontend according to any one of the preceding claims, wherein the baseband part (4) comprises at least one linearization unit (12) for linearization of an amplifier (9a to 9d) adapted for amplifying the RF signal (7a' to 7d') to be transmitted by a respective antenna element (5a to 5d), the linearization being based on the feedback signal (13) from the associated measurement antenna element (15a to 15d).

**5.** Transmit frontend according to claim 4, wherein the linearization unit (12) is adapted for performing digital pre-distortion of an input signal (7a to 7d) to be provided to the amplifier (9a to 9d).

**6.** Transmit frontend according to any one of the preceding claims, further comprising a mixing unit (17) for down-conversion of the feedback signal (13).

**7.** Transmit frontend according to any one of the preceding claims, further comprising an analog-to-digital converter (20) for converting the analog feedback signal (13) into a digital feedback signal (13).

**8.** Base station (2) comprising at least one transmit frontend (1) according to any one of the preceding claims.

**9.** Radio network (3) comprising at least one base station (2) according to claim 8.

**10.** Method for providing a feedback signal (13) to a baseband part (4) of a transmit frontend (1) of a base station (2), the method comprising:
transmitting an RF signal (7a' to 7d') from each of a plurality of antenna elements which are preferably devised as active antenna elements (5a to 5d),
receiving the RF signal (7a' to 7d') in one of a plurality of measurement antenna elements (15a to 15d), each measurement antenna element (15a to 15d) being associated with a respective one of the antenna elements (5a to 5d),
providing the feedback signal (13) from the measurement antenna element (15a to 15d) to the baseband part (4) of the transmit frontend (1) via a feedback path (14), and
using the feedback signal (13) for calibrating the antenna elements (5a to 5d) by adjusting timing delay differences between different ones of the antenna elements (5a to 5d).

**11.** Method according to claim 10, wherein only one of the measurement antenna elements (15a to 15d) at a time is connected to the feedback path (14).

**12.** Method according to claim 10 or 11, wherein the different antenna elements (5a to 5d) are devised as an antenna array.

**13.** Method according to any one of claims 10 to 12, further comprising:
using the feedback signal (13) of a measurement antenna element (15a to 15d) for linearization of an amplifier (9a to 9d) being adapted for amplifying the RF signal (7a' to 7d') to be transmitted by the associated active antenna element (5a to 5d), the linearization preferably further comprising: performing digital pre-distortion of an input signal (7a to 7d) which is provided to the amplifier (9a to 9d).

**14.** Computer program product adapted to perform all the steps of the method according to any one of claims 10 to 13.
